# FASCICULE DE BREVET EUROPEEN

(11) **EP 1 751 457 B1**
(45) Date de publication et mention de la délivrance du brevet: **20.11.2013**
(21) Numéro de dépôt: 05776356.7
(22) Date de dépôt: 02.06.2005
(51) Int. Cl.: F16L 9/18, F16L 9/14

(54) **PROCEDE DE FABRICATION D'UN TUBE EN MATERIAU COMPOSITE DE GRANDE RAIDEUR, ET TUBE OBTENU**
VERFAHREN ZUR HERSTELLUNG EINES SEHR STARREN ROHRES AUS VERBUNDWERKSTOFF UND AUF DIESE WEISE HERGESTELLTES ROHR
METHOD FOR PRODUCING A HIGHLY RIGID COMPOSITE MATERIAL TUBE, AND TUBE OBTAINED THEREBY

(30) Priorité: 04.06.2004 FR 0451113
(43) Date de publication de la demande: 14.02.2007
(73) Titulaire: Epsilon Composite Sarl, 33340 Gaillan (FR)
(72) Inventeur: PORTOLES, José, F-33340 QUEYRAC (FR)
(74) Mandataire: Fantin, Laurent
(86) Numéro de dépôt international: PCT/FR2005/050412
(87) Numéro de publication internationale: WO 2005/124212

(56) Documents cités:
- EP-A- 1 231 423
- US-A- 3 002 534
- US-A- 3 230 981
- US-A- 3 295 558

## Description

La présente invention concerne un procédé de fabrication d'un tube en matériau composite de grande raideur dont au moins une partie en enroulement filamentaire ainsi que le tube en matériau composite obtenu, notamment pour la réalisation de cylindres supports de manchon dans le domaine de l'impression. Les industries de la transformation du papier et/ou du plastique, de l'impression commerciale de journaux et/ou d'emballages ainsi que l'ennoblissement textile requiert une amélioration de la productivité donc une augmentation des tailles de machines et de leurs vitesses de travail.

De telles machines comprennent essentiellement un châssis et des cylindres utilisés pour entraîner ou guider la bobine de matière à transformer mais aussi pour participer à cette transformation en enduisant, exprimant, laminant ou imprimant ladite matière.

Ces cylindres sont réalisés en acier ou en aluminium mais avec ces matériaux, on atteint la limite masse/inertie/rigidité nécessaire à l'amélioration de la production tout en conservant la qualité de la transformation.

Le recours à la fibre de carbone, similaire à celui décrit dans le document US 3 295 558, a permis de répondre en partie à ces contraintes de vitesse et de laize.

Ainsi, en impression flexographique, la vitesse est passée de 150 à 250 m/min et la laize est passée de 900 à 1 200 mm.

Quant aux rotatives pour l'impression de journaux, elles travaillent sur 6 pages de large soit 2 000 mm de largeur et à une vitesse de 15 m/s.

Par contre la fabrication des cylindres à base de fibres de carbone utilise uniquement et pour la totalité des couches, les méthodes dites par enroulement filamentaire qui nécessitent de nombreuses étapes. Les coûts sont élevés et les fabrications généralement à l'unité, induisant des délais de réalisation incompatibles avec les besoins des utilisateurs des machines à cylindres. L'exemple retenu pour la description d'un mode particulier de réalisation selon l'invention est la fabrication d'un cylindre en matériau composite applicable notamment à l'industrie de la transformation du papier, plus particulièrement l'impression d'emballage, sans qu'un tel exemple puisse être considéré comme limitatif.

De tels cylindres sont prévus pour recevoir des manchons d'impression. Dans ce domaine, les déformations du support de clichés conduisent vite à des défauts non acceptables et surtout, la vitesse de travail très importante des machines, provoque rapidement des pertes importantes de matière.

Dans le domaine de l'impression, notamment en flexographie, il est prévu des cylindres, un par couleur, qui supportent un ou plusieurs clichés. Ces clichés reçoivent une quantité d'encre très précise au contact d'un cylindre encreur, encre qui est déposée sur le support papier, carton ou film polymère par contact. Le cliché est généralement rapporté sur un manchon pouvant être réalisé également en matériau composite.

Ce contact, dit aussi touche, est donc extrêmement précis et dépend de nombreux paramètres relatifs au cliché et au manchon. Cette touche doit impérativement être identique en tous points de la ligne de contact, ce qui oblige à maintenir les éventuelles déformations en dessous d'une tolérance donnée et très faible.

Le manchon est monté sur un cylindre support qui fait partie de la machine et qui est soumis aux moyens d'entraînement. De tels cylindres sont généralement creux et réalisés en acier car il faut limiter les déformations notamment les déformations sous charge et le faux-rond qui seraient intégralement reportées sur le manchon et qui seraient préjudiciables à la qualité de l'impression.

Ces défauts sont amplifiés par la vitesse de rotation élevée de ces cylindres.

De même, dans le cas de l'impression, la laize, en augmentant, provoque aussi l'augmentation de la flèche.

De plus, ces cylindres en acier sont d'un poids élevé et nécessitent généralement des moyens de levage pour leur mise en place.

Dans le cas de petites laizes, les déformations sont principalement provoquées par l'ovalisation du cylindre sous les effets de la pression de contact.

Devant ces problèmes, la présente invention propose un procédé de fabrication d'un tube en matériau composite de grande raideur qui pallie les inconvénients de l'art antérieur, dont une partie est réalisé par enroulement.

D'autres avantages du tube obtenu selon le procédé apparaîtrons dans les modes de réalisation retenus.

A cet effet, le procédé de fabrication d'un tube de grande raideur selon l'invention se caractérise en ce qu'il comprend les étapes suivantes :
- réaliser un premier tube intérieur en un premier matériau,
- disposer des entretoises sur ce tube, régulièrement réparties, ces entretoises étant réalisées en matériau composite, et
- réaliser au moins un deuxième tube, en un deuxième matériau, positionné sur les entretoises réparties sur le premier tube, en sorte de maintenir ces entretoises entre le premier et le second tube.

Selon un perfectionnement, on introduit de la résine ou un mélange de résines entre les deux tubes en particulier pour noyer les entretoises et combler les interstices.

Afin d'obtenir les résultats qui vont être indiqués ci-après, les entretoises sont réalisées en un matériau composite à base de fibres de carbone à très haut module, obtenu par pultrusion.

De préférence, les entretoises sont obtenues à partir de profilés plats réalisés à partir de fibres de carbone à très haut module mises en oeuvre par pultrusion et découpés pour assurer une positionnement sur le premier tube.

Les entretoises peuvent aussi être réalisées en forme adaptée en fonction du diamètre extérieur du premier tube et du diamètre intérieur du deuxième tube. L'invention couvre aussi le tube composite obtenu.

Le procédé selon la présente invention est maintenant décrit en détail en regard des dessins schématiques qui représentent :
- figures 1A et 1B, deux vues en perspective et en coupe, d'un premier mode de réalisation d'un tube selon l'invention, et
- figure 2, une vue d'un second mode de réalisation avec des entretoises conformées.

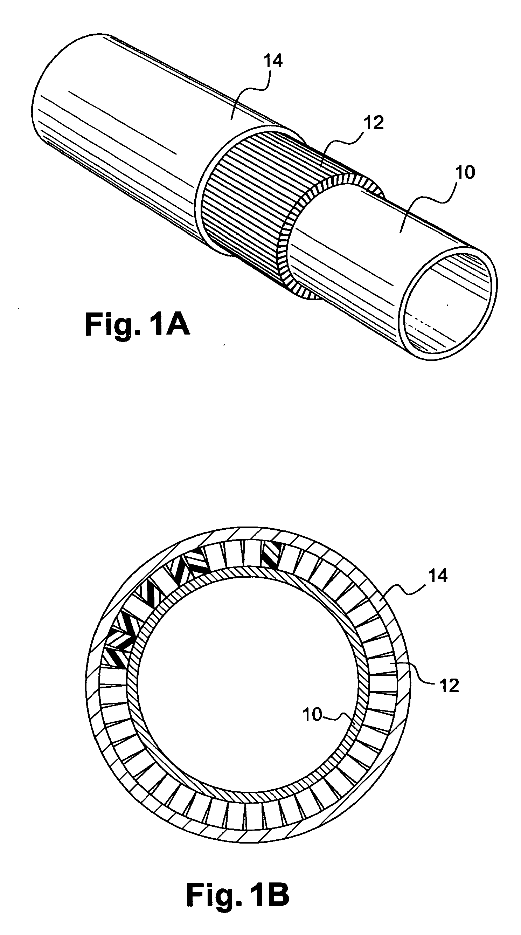

Sur la figure 1, on a représenté le résultat de la mise en oeuvre du procédé selon la présente invention.

Ce procédé consiste à réaliser un tube composite avec une âme support d'une grande rigidité.

Ce procédé est décrit dans la revendication 1.

Suivant un premier mode de réalisation, les deux premier et deuxième tubes sont réalisés en un même matériau, également à base de fibres de carbone.

L'un au moins de ces tubes est réalisé par enroulement filamentaire, l'autre étant réalisé par pultrusion ou tout autre moyen et éventuellement disponible dans le commerce.

Dans le premier mode de réalisation, les entretoises sont découpées à partir de profilés plats de matériau composite à base de fibres de carbone, l'épaisseur et la largeur de ces entretoises étant adaptées à l'espace libre entre les deux tubes coaxiaux réalisés par enroulement.

Le montage est obtenu par interposition de ces entretoises 12 entre les deux premier et deuxième tubes (10, 14).

Dans le cas où le premier tube est réalisé par enroulement, les entretoises sont réparties sur ce premier tube et liées à lui par tout moyen adapté, notamment la résine résiduelle de l'enroulement premier. Le deuxième tube préfabriqué est alors emboîté sur les entretoises, pour obtenir au moins une première succession coaxiale.

Si le premier tube est préfabriqué, alors les entretoises sont réparties sur ce premier tube puis le deuxième tube est réalisé par enroulement filamentaire qui assure simultanément l'immobilisation des entretoises et la constitution du deuxième tube.

La troisième solution consiste à réaliser les deux premier et deuxième tubes par enroulement filamentaire. Dans ce cas, on réalise le premier tube par enroulement, on dispose les entretoises et on réalise le deuxième tube sur les entretoises.

La disposition de ces entretoises, quel que soit le mode retenu de fabrication des tubes, est nécessairement symétrique mais peut varier suivant la raideur recherchée.

Ainsi, les entretoises peuvent être placées à saturation de l'espace libre ou suivant une répartition régulière mais en laissant subsister des espaces libres. De ce fait, on peut régler la raideur et renforcer en fonction des applications.

Afin de permettre une immobilisation des entretoises dans cet espace inter-tubes, le procédé prévoit une éventuelle étape d'injection d'une résine ou d'un mélange de résines entre les deux tubes, résine qui va noyer les entretoises et combler les interstices, en assurant également une parfaite liaison des deux tubes en rotation, supprimant tout effet de cisaillement.

On utilise ici le terme de résine car il s'agit de polymères mais on peut tout aussi bien parler de colle puisque c'est la fonction finale. Le terme résine ne doit pas être considéré comme limitatif.

Le tube ainsi obtenu est particulièrement homogène. Dans ce premier mode de réalisation, le poids du tube est minimisé et les caractéristiques obtenues sont surprenantes et atteignent des valeurs très attractives.

L'entretoise décrite dans la présente invention est réalisée par pultrusion, à partir de fibres de carbone dites à très haut module, commercialisées sous la marque Carbolam THM 400.

Cette fibre permet d'atteindre, avec l'agencement selon la présente invention des caractéristiques exceptionnelles.

Ainsi, un tube obtenu en tout carbone par le procédé selon la présente invention pèse 5 fois moins que le même tube en acier pour un module E, 1,7 fois supérieur atteignant 350 GPa.

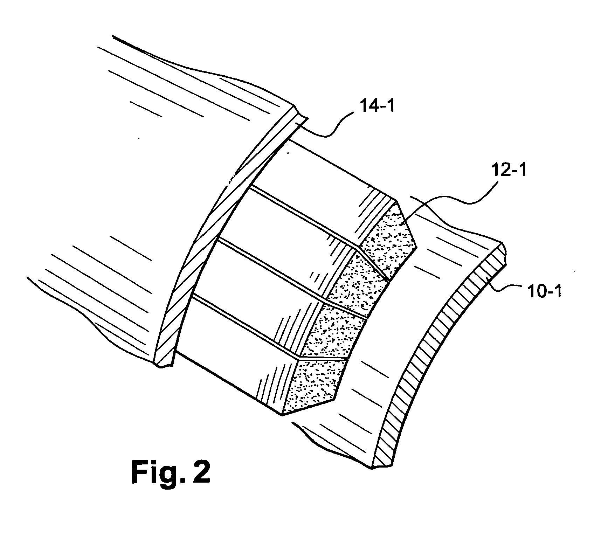

Dans le cas de la figure 2, le mode de réalisation consiste à pultruder des entretoises 12-1 en forme. Cette forme doit être optimisée en fonction des diamètres intérieur et extérieur pour être adaptée à l'espace inter-tubes prévu, entre les tubes 10-1 et 14-1.

La réalisation des deux tubes est conforme au procédé de la présente invention, à savoir que l'un au moins des deux tubes est réalisé par enroulement filamentaire.

Dans ce cas, le remplissage de matière est optimisé et la quantité de résine est diminuée à son minimum. Il est tout à fait possible de supprimer la présence de résine, encore plus aisément que dans le premier mode de réalisation, car la surface de contact entre les entretoises et les deux tubes enveloppes est encore augmentée. De plus, lors de l'enroulement du deuxième tube, la résine peut fluer légèrement dans cet espace inter-tubes entre les entretoises.

On note que dans le cas d'un tube tout carbone la surface extérieure peut être enduite d'une résine de surface autorisant la rectification pour l'obtention d'un diamètre avec de grandes précisions et une réduction du faux-rond dans les mêmes tolérances.

L'avantage du procédé selon la présente invention est de permettre la réalisation d'un support avec au moins un tube intérieur et des entretoises dans les espaces inter-tubes, celles-ci étant réalisées en carbone pultrudé.

Quant au matériau du tube extérieur, l'utilisateur peut en choisir la nature, sans perdre notablement sur les caractéristiques du produit fini. En effet, si seul le tube intérieur est réalisé en enroulement, le tube extérieur peut être métallique pré-fabriqué et emboîté sur les entretoises elles-mêmes disposées sur le premier tube.

Un autre problème contre lequel les tubes réalisés selon le procédé de la présente invention permettent de lutter est la déformation par ovalisation. Dans le cas de petite laize de l'ordre du mètre, les efforts importants exercés sur une génératrice du tube conduisent à son ovalisation.

Les entretoises permettent d'obtenir une rigidification de la section du tube et de conserver une section circulaire.

Même si la flèche est un paramètre moins critique, l'agencement avec des entretoises qui forment un rayonnage plus ou moins dense permet de compenser ces déformations sous efforts.

Ainsi, en fonction des applications, on peut ajuster le nombre et la disposition des entretoises, la forme pour arriver à des résultats satisfaisants au meilleur coût.

Les tubes selon la présente invention contribuent aussi à résoudre le problème des vibrations parasites générées dans le cas de machines tournantes.

Ainsi qu'indiqué, les vitesses linéaires de défilement atteintes peuvent aller jusqu'à 1 500 mètres/minute, ce qui conduit à des vitesses importantes de rotation et donc immanquablement à des vibrations.

Dans le cas de l'imprimerie par exemple, les vibrations provoquent des défauts nuisant fortement à la qualité, voire conduisant les produits au rebut.

Or la structure avec au moins un tube intérieur et des entretoises supportant un tube extérieur conduit à des ruptures de propagation, ne serait-ce que par le changement de nature de matériaux, ce qui évite au moins la transmission de fréquences identiques comme le font les matériaux monolithiques.

L'invention a été décrite avec une architecture comprenant deux tubes et des entretoises disposées dans l'espace inter-tubes mais il est possible de prévoir un autre tube intérieur avec un nouveau jeu d'entretoises disposées dans le nouvel espace inter-tubes ainsi réalisé, avec fabrication par enroulement ou à partir d'un tube pré-fabriqué et introduction des entretoises.

Cet agencement peut présenter un intérêt pour lutter fortement contre les vibrations.

Bien que d'autres agencements plus complexes puissent être envisagés avec un plus grand nombre de tubes, ils devront être réservés à des cas exceptionnels pour ne pas sortir du cadre d'industrialisation recherché avec l'agencement de la présente invention.

## Revendications

1. Procédé de fabrication d'un tube de grande raideur, **caractérisé en ce qu'**il comprend les étapes suivantes :
- réaliser un premier tube (10) intérieur en un premier matériau,
- disposer des entretoises (12) sur ce premier tube, régulièrement réparties, ces entretoises étant réalisées en matériau composite à base de fibres de carbone par pultrusion et découpées,
- réaliser au moins un deuxième (14) tube en un deuxième matériau, disposé autour de ces entretoises,
- l'un au moins des premier ou deuxième tube étant réalisé par enroulement filamentaire.

2. Procédé de fabrication d'un tube de grande raideur selon la revendication 1, **caractérisé en ce que** le premier et/ou le second tube sont réalisés par enroulement filamentaire lors de la fabrication du tube.

3. Procédé de fabrication d'un tube de grande raideur selon la revendication 1, **caractérisé en ce que** le premier et/ou le second tube sont préfabriqués et réalisés par enroulement filamentaire.

4. Procédé de fabrication d'un tube de grande raideur selon la revendication 1,2 ou 3, **caractérisé en ce que** l'on introduit de la résine ou un mélange de résines entre les deux tubes (10, 14) pour noyer les entretoises, combler les interstices, et assurer également une liaison des deux tubes en rotation.

5. Procédé de fabrication d'un tube de grande raideur selon l'une quelconque des revendications précédentes, **caractérisé en ce que** l'on utilise pour au moins un des tubes et pour les entretoises, un matériau composite à base de fibres de carbone à très haut module, obtenu par pultrusion.

6. Procédé de fabrication d'un tube de grande raideur selon l'une quelconque des revendications précédentes, **caractérisé en ce que** les entretoises sont obtenues à partir de profilés plats réalisés à partir de fibres de carbone à très haut module mises en oeuvre par pultrusion et découpés.

7. Procédé de fabrication d'un tube de grande raideur selon l'une quelconque des revendications précédentes, **caractérisé en ce que** les entretoises sont réalisées en forme, pour réaliser des secteurs.

8. Procédé de fabrication d'un tube de grande raideur selon l'une quelconque des revendications précédentes, **caractérisé en ce que** les premier et second matériaux sont de même nature.

## Patentansprüche

1. Verfahren zur Herstellung eines Rohres großer Steifigkeit, **dadurch gekennzeichnet, dass** es folgende Verfahrensschritte umfasst:
- Bereitstellen eines inneren, ersten Rohres (10) aus einem ersten Material,
- Anordnen von gleichmäßig verteilten Abstandshaltern (12) auf dem ersten Rohr, wobei die Abstandshalter aus einem Verbundmaterial auf der Grundlage von Kohlenstofffasern durch Strangziehen hergestellt und abgeteilt worden sind,
- Bereitstellen von wenigstens einem zweiten Rohr (14) aus einem zweiten Material, das um die Abstandshalter herum angeordnet ist,
- Herstellen von wenigstens einem des ersten oder zweiten Rohres durch ein Wickelverfahren.

2. Verfahren zur Herstellung eines Rohres großer Steifigkeit nach Anspruch 1, **dadurch gekennzeichnet, dass** das erste und/oder das zweite Rohr durch ein Wickelverfahren bei der Herstellung des Rohres erzeugt werden.

3. Verfahren zur Herstellung eines Rohres großer Steifigkeit nach Anspruch 1, **dadurch gekennzeichnet, dass** das erste und/oder das zweite Rohr durch ein Wickelverfahren vorgefertigt und erzeugt werden/wird.

4. Verfahren zur Herstellung eines Rohres großer Steifigkeit nach Anspruch 1, 2 oder 3, **dadurch gekennzeichnet, dass** ein Harz oder eine Mischung von Harzen zwischen die zwei Rohre (10, 14) eingebracht wird, um die Abstandshalter zu tränken, die Zwischenräume aufzufüllen und auch eine Verbindung zwischen den beiden Rohren in Drehrichtung zu gewährleisten.

5. Verfahren zur Herstellung eines Rohres großer Steifigkeit nach einem der vorhergehenden Ansprüche, **dadurch gekennzeichnet, dass** für wenigstens eines der Rohre und für die Abstandshalter ein durch Strangziehen erhaltenes Verbundmaterial auf der Grundlage von Kohlenstofffasern mit sehr großem Modul verwendet wird.

6. Verfahren zur Herstellung eines Rohres großer Steifigkeit nach einem der vorhergehenden Ansprüche, **dadurch gekennzeichnet, dass** die Abstandshalter ausgehend von flachen Profilen erzeugt werden, die anhand von Kohlenstofffasern mit sehr großen Modul erzeugt werden, die durch Strangziehen bereitgestellt und getrennt werden.

7. Verfahren zur Herstellung eines Rohres großer Steifigkeit nach einem der vorhergehenden Ansprüche, **dadurch gekennzeichnet, dass** die Abstandshalter in einer Form erzeugt werden, um Sektoren zu bewerkstelligen.

8. Verfahren zur Herstellung eines Rohres großer Steifigkeit nach einem der vorhergehenden Ansprüche, **dadurch gekennzeichnet, dass** die ersten und zweiten Materialien von der gleichen Art sind.

## Claims

1. A method for manufacturing a stiff tube, **characterised in that** it comprises the following steps:
- producing a first internal tube (10) from a first material,
- disposing braces (12) on this first tube, regularly distributed, these braces being produced from composite material based on carbon fibres by pultrusion and cut,
- producing at least one second tube (14) from a second material, disposed around these braces,
- at least one of the first or second tube being produced by filamentary winding.

2. A method for manufacturing a stiff tube according to claim 1, **characterised in that** the first and/or second tube are produced by filamentary winding when the tube is manufactured.

3. A method for manufacturing a stiff tube according to claim 1, **characterised in that** the first and/or second tube are prefabricated and produced by filamentary winding.

4. A method for manufacturing a stiff tube according to claim 1, 2 or 3, **characterised in that** resin or a mixture of resins is introduced between the two tubes (10, 14) in order to embed the braces, fill in the gaps and also provide a connection of the two tubes with respect to rotation.

5. A method for manufacturing a stiff tube according to any one of the preceding claims, **characterised in that**, for at least one of the tubes and for the braces, use is made of a composite material based on carbon fibres with a very high modulus, obtained by pultrusion.

6. A method for manufacturing a stiff tube according to any one of the preceding claims, **characterised in that** the braces are obtained from flat profiles produced from carbon fibres with a very high modulus implemented by pultrusion and cutting.

7. A method for manufacturing a stiff tube according to any one of the preceding claims, **characterised in that** the braces are produced shaped, in order to produce sectors.

8. A method for manufacturing a stiff tube according to any one of the preceding claims, **characterised in that** the first and second materials are of the same nature.
